# EUROPÄISCHE PATENTSCHRIFT

(11) **EP 1 523 800 B1**
(45) Veröffentlichungstag und Bekanntmachung des Hinweises auf die Patenterteilung: **13.05.2009**
(21) Anmeldenummer: 03766210.3
(22) Anmeldetag: 18.07.2003
(51) Int. Cl.: H02K 13/10

(54) **TROMMELKOMMUTATOR FÜR EINE ELEKTRISCHE MASCHINE**
DRUM COMMUTATOR FOR AN ELECTRIC MACHINE
COMMUTATEUR A TAMBOUR POUR MACHINE ELECTRIQUE

(30) Priorität: 24.07.2002 DE 10233712
(43) Veröffentlichungstag der Anmeldung: 20.04.2005
(73) Patentinhaber: Kolektor Group d.o.o., 5280 Idrija (SI)
(72) Erfinder: POTOCNIK, Joze, 5280 Idrija (SI)
(74) Vertreter: Grättinger & Partner (GbR)
(86) Internationale Anmeldenummer: PCT/EP2003/007813
(87) Internationale Veröffentlichungsnummer: WO 2004/013945

(56) Entgegenhaltungen:
- US-B1- 6 285 106
- PATENT ABSTRACTS OF JAPAN vol. 007, no. 021 (E-155), 27. Januar 1983 (1983-01-27) -& JP 57 177253 A (ISHIZUKA DENSHI KK;OTHERS: 01), 30. Oktober 1982 (1982-10-30)

## Beschreibung

Die vorliegende Erfindung betrifft einen Trommelkommutator für eine elektrische Maschine, umfassend einen aus isolierendem Preßstoff gefertigten hülsenförmigen Trägerkörper, eine Mehrzahl von an diesem gleichmäßig um die Kommutatorachse herum angeordneten metallischen Leitersegmenten mit endseitig daran angeordneten Anschlußfahnen und eine ringförmige Entstörscheibe, welche mit den Leitersegmenten im Bereich der den Anschlußfahnen gegenüberliegenden Enden elektrisch leitend verbunden ist.

Trommelkommutatoren, auch als Walzenkommutatoren bezeichnet, sind in vielfältigen Ausgestaltungen bekannt. Zunehmend werden Trommelkommutatoren dabei, um eine Beeinträchtigung benachbart angeordneter elektronischer Baugruppen zu verhindern, mit Einrichtungen zur Funkenunterdrückung ausgerüstet. Solche Entstöreinrichtungen können namentlich als ringförmige, aus einem Material mit einem spannungsabhängigen Widerstand bestehende Elemente ausgeführt sein, die mit den Leitersegmenten elektrisch leitend verbunden sind.

Was die Anordnung jener ringförmigen Elemente an dem Trommelkommutator angeht, sind zwei grundlegende Bauweisen voneinander zu unterscheiden, nämlich einerseits radial außerhalb der Bürstenlauffläche angeordnete Entstörringe (vgl. z.B. US 5895990 A, US 5717270 A, GB 2183933 A und US 5796203 A) und andererseits radial innerhalb der Bürstenlauffläche angeordnete Entstörringe (vgl. z.B. US 6285106 B1 und DE 19953231 A1). Darüber hinaus bekannt sind Sonderformen von entstörten Trommelkommutatoren, bei denen die Leitersegmente außen auf zylindrischen Entstörelementen angeordnet sind (vgl. DE 2055648 und DE 3614869 C2). Die EP 364292 B1 und die insoweit inhaltsgleiche GB 2224606 A beschreiben schließlich einen Trommelkommutator mit einem aus thermoplastischem Material bestehenden Trägerkörper, bei dem radial unterhalb der Anschlußfahnen ein wärmebeständiger Verstärkungsring vorgesehen ist, der (vgl. EP 364292 B1) eine entstörende Beschichtung aufweisen oder benachbart zu dem ein separater Entstörring angeordnet bzw. (vgl. GB 2224606 A) selbst als Entstörring ausgeführt sein kann; der Verstärkungsring ist dabei ebenso wie der (ggf. ergänzend vorgesehene separate zusätzliche) Entstörring auf einem Sitz des Trägerkörpers angeordnet, wo er durch von den Leitersegmenten vorspringende Laschen gehalten wird.

Bei Trommelkommutatoren mit radial außerhalb der Bürstenlauffläche angeordneten Entstörringen ist von Nachteil, daß sich die Herstellung nicht oder allenfalls unter Inkaufnahme von Qualitätseinbußen automatisieren läßt. Im übrigen kommen für viele praktische Anwendungen wegen der Beschränkung des für den jeweiligen Kommutator zur Verfügung stehenden Raumes nur Trommelkommutatoren mit radial innerhalb der Bürstenlauffläche angeordneten Entstörringen in Betracht.

Ein bei solchen Trommelkommutatoren mit radial innerhalb der Bürstenlauffläche angeordneten Entstörringen bestehendes Problem resultiert aus dem unterschiedlichen Wärmedehnverhalten der üblicherweise aus keramischem Material bestehenden Entstörringe verglichen mit den übrigen Komponenten betreffender Kommutatoren. Entsprechende Wärmespannungen können nämlich, sofern nicht besondere Vorkehrungen getroffen werden, zum vorzeitigen Ausfall von Kommutatoren infolge gebrochener Entstörscheiben und/oder zerstörter Verbindungen der Leitersegmente mit den Entstörscheiben führen. Zur Lösung dieses Problems wird in der DE 19953231 A1 vorgeschlagen, die Entstörscheibe mit einem elastischen Klebstoff mit dem Trägerkörper zu verbinden und die Leitersegmente an die Entstörscheibe über dünne Drähte anzuschließen, welche einerseits an der Anschlußfahne des zugeordneten Leitersegments und andererseits an einer zugeordneten Metallisierungszone der Entstörscheibe angelötet werden. Nach der US 6285106 B1, welche einen Trommelkommutator der gattungsgemäßen Art offenbart, sind demgegenüber zur elektrischen Kontaktierung der Leitersegmente mit der Entstörscheibe Blechfedern vorgesehen, welche innerhalb eines ringförmigen Hohlraums angeordnet sind, welcher durch den Trägerkörper, die Leitersegmente und einen ringförmigen Deckel begrenzt wird und in dem auch die Entstörscheibe aufgenommen ist. Die Blechfedern, die eine unterschiedliche radiale Wärmedämmung der Entstörscheibe einerseits und der übrigen Kommutatorbauteile andererseits zulassen, können dabei insbesondere an dem ringförmigen Deckel befestigt sein.

Nachteilig bei den beiden bekannten, vorstehend gewürdigten Trommelkommutatoren mit einer jeweils radial innerhalb der Leitersegmente angeordneten Entstörscheibe ist insbesondere der hohe, der Konkurrenzfähigkeit der entsprechenden Trommelkommutatoren entgegenstehenden Herstellungsaufwand, der insbesondere im Falle des Kommutators nach der EP 364292 B1 maßgeblich durch die hohe Anzahl der zusammenzufügenden Bauteile begründet ist. Bei dem Trommelkommutator nach der EP 364292 B1 ist weiterhin nachteilig, daß die allein auf der Anlagekraft der Blechfedern an den Leitersegmenten und an der Entstörscheibe resultierende Kontaktierung nicht dauerhaft zuverlässig ist, beispielsweise indem sie durch Korrosion beeinträchtigt werden kann.

Die der vorliegenden Erfindung zugrundeliegende Aufgabenstellung besteht demgemäß darin, einen langlebigen, zuverlässigen entstörten Trommelkommutator der gattungsgemäßen Art bereitzustellen, der sich mit einem geringen Herstellungsaufwand zu niedrigen Kosten fertigen läßt, wobei besonders bevorzugt möglich sein soll, einen entstörten Kommutator mit im wesentlichen denselben Abmessungen wie einem nicht-entstörten Trommelkommutator gleicher Auslegung herzustellen.

Gelöst wird diese Aufgabenstellung gemäß der vorliegenden Erfindung durch die Merkmale des Vorrichtungs anspruchs 1 und der Verfahrenansprüche 20 und 22. Zumteil dadurch, daß die Leitersegmente im Bereich der den Anschlußfahnen gegenüberliegenden Enden federnde Kontaktzungen in Form von im wesentlichen axialen Fingern aufweisen, die entfernt von ihren Fußpunkten jeweils an zugeordneten Kontaktpunkten unmittelbar und fest mit der Entstörscheibe verbunden sind, wobei die federnden Kontaktzungen jeweils in dem Bereich zwischen ihrem Fußpunkt und ihrem Kontaktpunkt gegenüber benachbarten Bauteilen des Trommelkommutators dergestalt getrennt sind, daß sich in diesem Bereich die relative Lage der Kontaktzungen zu den diesen jeweils benachbarten Bauteilen des Kommutators wärmedehnungsbedingt verändern kann. Ein erstes charakteristisches Merkmale für den Trommelkommutator nach der vorliegenden Erfindung ist somit, daß Kontaktzungen, welche integraler Bestandteil der Leitersegmenten, d.h. einstückig mit den weiteren Bereichen der Leitersegmente hergestellt sind, direkt und unmittelbar der Kontaktierung der Leitersegmente mit der Entstörscheibe dienen; gesonderte, zusätzliche Bauteile, wie sie nach dem Stand der Technik insbesondere in Form von Drähten und Blechfedern zur Kontaktierung der Leitersegmente mit der Entstörscheibe vorgesehen sind, weist der Trommelkommutator nach der vorliegenden Erfindung somit nicht auf. Die direkte und unmittelbare Kontaktierung der einstückig an den Leitersegmenten angeformten Kontaktzungen mit der Entstörscheibe, ohne daß dies nachteilige Auswirkungen auf die Lebensdauer des Trommelkommutators hat, wird dabei dadurch ermöglicht, daß sich die Kontaktzungen zum Ausgleich unterschiedlicher Wärmedehnungsverhalten der Entstörscheibe einerseits und der übrigen Kommutatorbauteile andererseits verformen können. Die Verformbarkeit der Kontaktzungen ergibt sich hinwiederum einerseits aus deren federnder Ausführung, wobei die Kontaktpunkte, an denen die Kontaktfedern unmittelbar und fest mit der Entstörscheibe verbunden sind, entfernt von den Fußpunkten der Kontaktzungen, an denen diese im Sinne einer statischen Einspannung in den angrenzenden Bereich der Leitersegmente übergehen, angeordnet sind, und andererseits aus der Trennung der Kontaktzungen gegenüber den benachbarten Bauteilen, so daß letztere den freien Dehnungsausgleich nicht behindern. Namentlich sind bei dem erfindungsgemäßen Trommelkommutator in diesem Sinne die federnden Kontaktzungen an ihren radialen Innenflächen gegenüber dem benachbarten, radial innerhalb der Kontaktzungen angeordneten Bauteil dergestalt getrennt, daß sich ihr Abstand zu dem betreffenden Bauteil wärmedehnungsbedingt verändern kann. Durch jene Trennung der federnden Kontaktzungen zu dem radial innen angrenzenden Bauteil des Kommutators können die Kontaktzungen in Abhängigkeit von der jeweiligen Wärmedehnung der einzelnen Bauteile einen mehr oder weniger großen radialen Abstand zu den radial innen an sie angrenzenden Bauteilen einhalten. Durch die Verformbarkeit der Kontaktzungen werden im übrigen die Spannungen, welche im Bereich der festen Verbindung der Kontaktzungen mit der Entstörscheibe wirken, so weit reduziert, daß Schäden an dieser Verbindung ausgeschlossen werden. Die Kontaktzungen können somit insbesondere mittels einfacher Lötverbindungen oder auch elektrisch leitender Klebeverbindungen im Bereich der Kontaktpunkte dauerhaft mit der Entstörscheibe verbunden werden, wobei vorgesehen sein kann, daß die Kontaktzungen durch um die Kommutatorachse herum angeordnete Bohrungen der Entstörscheibe hindurchgeführt sind.

Ersichtlich lassen sich somit in Anwendung der vorliegenden Erfindung aufgrund der Kombinationen der für erfindungsgemäße Trommelkommutatoren charakteristischen Merkmale mit minimalem Fertigungsaufwand und unter Verwendung einer minimalen Anzahl von Bauteilen äußerst preisgünstige, langlebige und kompakte entstörte Trommelkommutatoren herstellen.

Eine erste bevorzugte Weiterbildung des Trommelkommutators nach der vorliegenden Erfindung zeichnet sich dadurch aus, daß die radiale Dicke der federnden Kontaktzungen geringer ist als die Dicke der Leitersegmente. Dies begünstigt nicht nur die vorstehend erläuterte federnde Nachgiebigkeit der Kontaktzungen. Auch erweist sich eine solche Ausbildung der Kontaktzungen, wie aus den nachfolgenden Erläuterungen unmittelbar ersichtlich wird, als besonders günstig im Hinblick auf die Minimierung der Abmessungen des entstörten Kommutators nach der vorliegenden Erfindung.

Die reduzierte Dicke der Kontaktzungen gegenüber den Leitersegmenten wird besonders bevorzugt dadurch erreicht, daß die radiale Außenfläche der federnden Kontaktzungen gegenüber der Bürstenlauffläche nach innen versetzt ist. Zugleich ist besonders bevorzugt die in Umfangsrichtung ermittelte Breite der federnden Kontaktzungen geringer als die Breite der Leitersegmente; und die Leitersegmente weisen benachbart den Kontaktzungen einen oder - besonders bevorzugt - zwei axiale Vorsprünge, welche wiederum integraler Bestandteil der Leitersegmente sind, auf, wobei die radiale Außenflächen der axialen Vorsprünge in Verlängerung der Bürstenlauffläche angeordnet sind. Hierdurch wird möglich, daß in einem den erfindungsgemäßen Kommutator umfassenden Kommutierungssystem die an der Bürstenlauffläche des Kommutators anliegenden Bürsten sich in axialer Richtung zumindest teilweise in den Bereich, in dem die federnden Kontaktzungen angeordnet sind, hinein erstrecken bzw., mit anderen Worten, die Kontaktzungen zumindest teilweise überdecken. Indem die radialen Außenflächen der federnden Kontaktzungen gegenüber der Bürstenlauffläche nach innen versetzt sind, können auch infolge entsprechender Wärmespannungen radial nach außen verformte federnde Kontaktzungen nicht mit den Bürsten kollidieren; auch die Bürsten behindern somit nicht eine wärmespannungsbedingte Verformung der Kontaktzungen, obwohl die Bürsten, zur Minimierung der Abmessungen des Kommutators, die Kontaktzungen überlappen. Die benachbart zu den Kontaktzungen vorgesehenen axialen Vorsprünge der Leitersegmente vergrößern dabei die Bürstenlauffläche, was wiederum günstig ist im Hinblick auf die Möglichkeiten, die Abmessungen des erfindungsgemäßen Kommutators zu minimieren, insbesondere an die Abmessungen nicht-entstörter Kommutatoren gleicher Auslegung anzupassen. Die radiale Dicke der genannten axialen Vorsprünge der Leitersegmente ist dabei i.a. größer als die radiale Dicke der federnden Kontaktzungen.

Gemäß einer anderen bevorzugten Weiterbildung der Erfindung ist vorgesehen, daß die federnden Kontaktzungen die Entstörscheibe radial außen umgeben, wobei die federnden Kontaktzungen an ihren radialen Innenflächen gegenüber der Entstörscheibe bzw. einem diese umgebenden Preßstoffmantel getrennt sind, insbesondere gegenüber diesen Bauteilen einen radialen Abstand einhalten. Eine solche Ausführung des erfindungsgemäßen Kommutators genügt extremen Anforderungen an eine kurze axiale Baulänge. Bei erfindungsgemäßen Trommelkommutatoren, bei denen es insbesondere auf einen geringen Durchmesser ankommt, ist demgegenüber gemäß einer anderen bevorzugten Weiterbildung der Erfindung vorgesehen, daß die Entstörscheibe um die Kommutatorachse herum angeordnete Bohrungen aufweist, durch welche die Kontaktzungen hindurch geführt sind. Die Kontaktpunkte, an denen die federnden Kontaktzungen fest mit der Entstörscheibe verbunden sind, liegen dabei auf der nach außen weisenden Stirnfläche der Entstörscheibe; und die Bohrungen sind um ein solches Maß größer dimensioniert als die Querschnitte der Kontaktzungen, daß die die Wärmedehnungsunterschiede kompensierende Verformung der federnden Kontaktzungen nicht durch die Bohrungen behindert wird.

Umgeben im Sinne der ersten der beiden vorstehend erläuterten Weiterbildungen die Kontaktzungen die Entstörscheibe radial außen, so sind die federnden Kontaktzungen besonders bevorzugt hakenförmig gekrümmt und liegen an der nach außen weisenden Stirnfläche der Entstörscheibe an. Besonders bevorzugt halten dabei die federnden Kontaktzungen im Bereich ihrer hakenförmigen Krümmung einen Abstand zu der äußeren stirnseitigen Kante der Entstörscheibe und einem diese ggf. umgebenden Preßstoffmantel ein. Solchermaßen ausgeführte, hakenförmig gekrümmte federnde Kontaktzungen begünstigen einen Ausgleich möglicher, auf unterschiedliche Wärmedehnungen der einzelnen Bauteile zurückgehender Spannungen in axialer Richtung durch entsprechende Verformung der hakenförmig gekrümmte Bereiche der Kontaktzungen und sind auch im Hinblick auf mögliche Fertigungstoleranzen vorteilhaft. Alternativ oder additiv kann, um einer Beschädigung des Kommutators durch entsprechende axiale Wärmedehnungsspannungen entgegenzuwirken, die nach innen weisende axiale Stirnfläche der Entstörscheibe zu dem Trägerkörper einen Abstand einhalten.

Die vorstehend erläuterte Kontaktierung der Kontaktzungen an der nach außen weisenden Stirnfläche der Entstörscheibe ist indessen keineswegs zwingend. In Betracht kommt im Rahmen der vorliegenden Erfindung in gleicher Weise eine Kontaktierung der Kontaktzungen an der Umfangsfläche der Entstörscheibe wie auch eine Kontaktierung an derer äußeren, nach außen weisenden Stirnkante der Entstörscheibe, d.h. im Übergangsbereich von der Stirnfläche zur Umfangsfläche.

Wiederum bei einem Trommelkommutator mit einer radial innerhalb der Kontaktzungen angeordneten Entstörscheibe ist gemäß einer abermals anderen bevorzugten Weiterbildung der Erfindung vorgesehen, daß die Entstörscheibe an ihrer äußeren Umfangsfläche von einem aus isolierendem Preßstoff bestehenden Mantel umgeben ist, wobei die federnden Kontaktzungen an ihren radialen Innenflächen jeweils gegenüber dem Preßstoffmantel getrennt sind, insbesondere einen radialen Abstand zu dem Preßstoffmantel einhalten. In entsprechender Weise ist bevorzugt ein an der inneren Umfangsfläche der Entstörscheibe anliegender, aus isolierendem Preßstoff bestehender Kragen vorgesehen. Eine solche Einbettung der Entstörscheibe in isolierenden Preßstoff erweist sich als besonders günstig im Hinblick auf eine zuverlässig lange Funktionstauglichkeit des Kommutators, nicht zuletzt deshalb, weil sicher ausgeschlossen ist, daß sich Abrieb von leitfähigem Material, namentlich Abrieb der Bürsten, an nicht-freiliegenden Flächen der Entstörscheibe niederschlägt. Ferner erweisen sich der betreffende Preßstoffmantel wie auch der betreffende Preßstoffkragen als besonders günstig während der Montage des fertigen Kommutators auf der Rotorwelle der betreffenden elektrischen Maschine, da die zum Aufpressen des Kommutators auf die Welle erforderlichen axialen Kräfte über den Kragen und/oder den Mantel in den Trägerkörper eingeleitet werden können, wodurch die Gefahr einer Beschädigung oder gar Zerstörung der Entstörscheibe während der Montage des Kommutators maßgeblich reduziert wird.

Im Rahmen der vorliegenden Erfindung können unterschiedliche Entstörscheiben zum Einsatz kommen. Insbesondere eignen sich, ohne daß die vorliegende Erfindung hierauf beschränkt wäre, Varistor-Scheiben und Kondensator-Scheiben (sog. multi layer ceramic condensers) zur Verwendung als Entstörscheibe für erfindungsgemäße Trommelkommutatoren.

Gemäß einer abermals anderen bevorzugten Weiterbildung der Erfindung ist vorgesehen, daß die Entstörscheibe an ihren beiden Stirnflächen einander gegenüberliegende Metallisierungszonen aufweist, die jeweils paarweise über randseitige Metallisierungszonen miteinander elektrisch leitend verbunden sind. Eine solche Ausführung der Entstörscheibe ist besonders günstig im Hinblick auf deren bestimmungsgemäße Funktion, da sich hierdurch die Entstörcharakteristik positiv beeinflussen läßt.

Bevorzugt weist der Trägerkörper des erfindungsgemäßen Trommelkommutators benachbart zu den Verbindungen der Kontaktzungen mit der Leitersegmenten taschenförmige Vertiefungen auf. Dies begünstigt die Herstellung des Kommutators. Zudem läßt sich durch entsprechende Taschen die für die Verformung der federnden Kontaktzungen zur Verfügung stehende axiale Länge vergrößern, so daß die Nachgiebigkeit der Kontaktzungen zunimmt und somit interne Spannungen auf ein geringeres Maß begrenzt werden.

Was die Fertigung des erfindungsgemäßen Trommelkommutators angeht, so kommen grundsätzlich zwei Möglichkeiten für die Montage der Entstörscheibe in Betracht. Zum einen kann die Entstörscheibe auf das den Trägerkörper und die Leitersegmente bzw. einen sämtliche Leitersegmente umfassenden Leiterrohling umfassende Verbundteil aufgelegt und an die Kontaktzungen angelötet oder auf sonstige Weise angeschlossen (z.B. elektrisch leitend verklebt) werden, insbesondere nachdem diese - im Falle einer Anordnung der Entstörscheibe radial innerhalb der Kontaktzungen - hakenförmig umgebogen worden sind; das heißt, es wird erst der Trägerkörper an den Leiterrohling angespritzt, bevor, gegebenenfalls nach Segmentierung des Leiterrohlings in die einzelnen Leitersegmente, die Entstörscheibe montiert und kontaktiert wird. Gegebenenfalls kann in diesem Falle bei der Herstellung des Trägerkörpers Stirnseite eine Ringnut ausgeformt werden, in welche später die Entstörscheibe eingelegt wird. Innerhalb dieser Verfahrensführung ist durchaus möglich, die Entstörscheibe erst nach der Montage des - insoweit noch nicht fertiggestellten - Kommutatorrohlings auf der Rotorwelle zu montieren; auf diese Weise könnte dem Hersteller der elektrischen Maschine, in Verbindung mit der der erfindungsgemäße Kommutator verwendet werden soll, je nach den Bedingungen die Auswahl und Montage der Entstörscheibe überlassen werden. Gemäß einer anderen besonders bevorzugten Verfahrensführung wird indessen die Entstörscheibe vor dem Anspritzen des Trägerkörpers an den Leiterrohling auf letzteren aufgesteckt und ggf. bereits mit den Kontaktzungen kontaktiert; diese Verfahrensführung gestattet, daß die Entstörscheibe bei der Herstellung des Trägerkörpers in die dessen Herstellung dienende Preßstoffmasse eingebettet wird, um den weiter oben erläuterten Preßstoffmantel und/oder Preßstoffkragen auszubilden.

Was die Herstellung der federnden Kontaktzungen angeht, so gibt es hierfür, insbesondere in Abhängigkeit von der zu fertigenden Stückzahl, unterschiedliche bevorzugte Fertigungsverfahren. Zum einen können die Leitersegmente von der den Anschlußfahnen gegenüberliegenden Stirnseiten her eingesägt werden, und zwar besonders bevorzugt jedes Leitersegment zweifach, so daß zwischen den beiden Sägeschnitten jeweils eine federnde Kontaktzunge ausgebildet wird, während benachbart zu den Kontaktzungen die weiter oben erläuterten axialen Vorsprünge entstehen, welche die Bürstenlauffläche des betreffenden Kommutators über den Fußbereich der Kontaktzungen hinaus axial verlängern können. Die reduzierte radiale Dicke der späteren federnden Kontaktzungen wird dabei zweckmäßigerweise bereits bei der Herstellung des Leiterrohlings ausgeformt, und zwar unabhängig davon, ob dieser aus einem Streifenmaterial gewickelt oder aber aus einem Blech durch Tiefziehpressen oder aber aus einen Rohrabschnitt durch Prägen hergestellt wird. Bei Trommelkommutatoren, die in Einzelsegmentbauweise hergestellt werden, d.h. nicht unter Verwendung eines einteiligen Leiterrohlings, der sämtliche über Brückenteile miteinander verbundenen Leiter segmente umfaßt, wird die reduzierte radiale Dicke der späteren federnden Kontaktzungen zweckmäßigerweise bereits bei der Herstellung der Rohlinge für die einzelnen Leitersegmente ausgeformt. Ein solches Herstellen der federnden Kontaktzungen durch stirnseitiges Einsägen der Leitersegmente ist insbesondere bei kleinen Stückzahlen unter Gesichtspunkten der Wirtschaftlichkeit zu bevorzugen. Sind hingegen von dem erfindungsgemäßen Trommelkommutator große Serien zu fertigen, so erweist sich als günstig, die federnden Kontaktzungen durch ein Scherwerkzeug herzustellen, welches auf der den Anschlußfahnen gegenüberliegenden Stirnseite der Leitersegmente das Ausgangsmaterial - besonders bevorzugt wiederum jeweils zweifach - schert, um durch Abscheren eines mittleren, schmalen Streifens aus dem Ausgangsmaterial die Kontaktzungen und beiderseits daneben die weiter oben erläuterten axialen Vorsprünge herzustellen. Besonders bevorzugt erfolgt dabei ein zweistufiges Abscheren der federnden Kontaktzungen aus dem verbleibenden Material, indem die Kontaktzungen zunächst, in einem ersten Schritt, radial nach außen von dem verbleibenden Material der Leitersegmente abgeschert werden, bis sie schräg nach außen abstehen; später, ggf. nachdem die Entstörscheibe aufgelegt worden ist, werden die Kontaktzungen dann, in einem zweiten Schritt, radial nach innen verdrängt , und zwar über ihre ursprüngliche Lage hinaus. Die Breite der in den beiden Schritten einzusetzenden Stempel wird dabei so gewählt, daß zwischen den federnden Kontaktzungen und den benachbarten axialen Vorsprüngen der Leitersegmente eine solche Trennung, zweckmäßigerweise schmale Spalte entstehen, daß die für die vorliegende Erfindung wesentliche Ausweichbewegung der federnden Kontaktzungen radial nach außen nicht behindert wird. Sofern überhaupt stirnseitig an den Kontaktzungen hakenförmige Umbiegungen vorgesehen sind, so können diese insbesondere bei dem zweiten vorstehend erläuterten Verformungsschritt ausgeformt werden. Im übrigen ist darauf hinzuweisen, daß sich die beiden vorstehend erläuterten bevorzugten Verfahrensführungen zur Herstellung der federnden Kontaktzungen unabhängig davon anwenden lassen, ob die Entstörscheibe in die Preßstoffmasse eingebettet wird oder nicht (s.o.).

Im folgenden wird die vorliegende Erfindung anhand von vier in der Zeichnung veranschaulichten bevorzugten Ausführungsbeispielen näher erläutert. Dabei zeigt
- Fig. 1: einen Axialschnitt durch eine erste Ausführungsform eines Trommelkommutators nach der vorliegenden Erfindung,
- Fig. 1a: einen vergrößerten Ausschnitt der Fig. 1,
- Fig. 2: eine perspektivische Ansicht des Trommelkommutators nach Fig. 1,
- Fig. 3: einen Axialschnitt durch eine zweite Ausführungsform eines Trommelkommutators nach der vorliegenden Erfindung,
- Fig. 4: einen Axialschnitt durch eine dritte Ausführungsform eines Trommelkommutators nach der vorliegenden Erfindung,
- Fig. 5: einen Axialschnitt durch eine vierte Ausführungsform eines Trommelkommutators nach der vorliegenden Erfindung und
- Fig. 6: in perspektivischer Ansicht die zur Herstellung des Trommelkommutators nach Fig. 5 eingesetzte Entstörscheibe in Form einer Kondensatorscheibe.

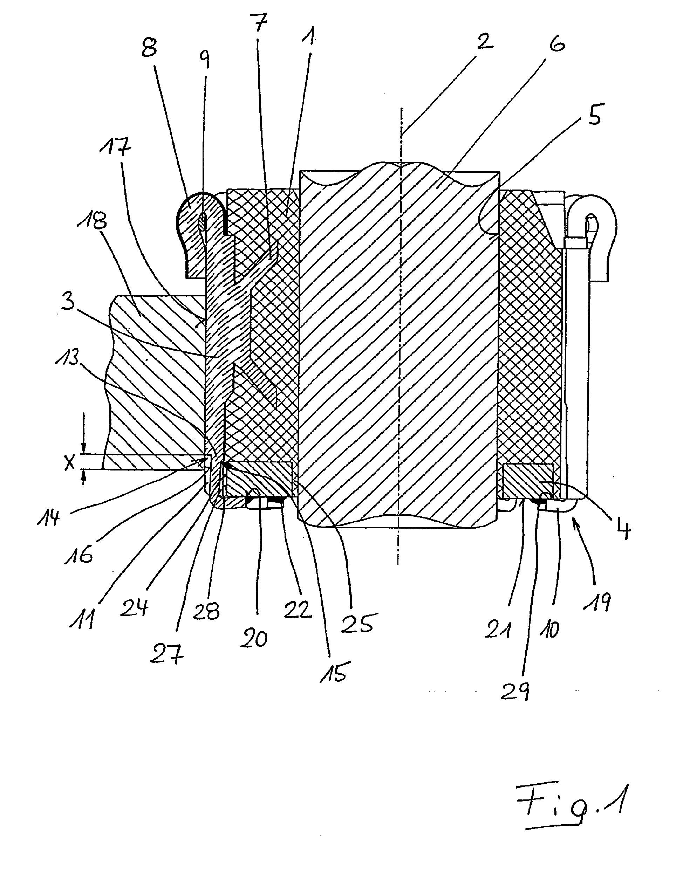

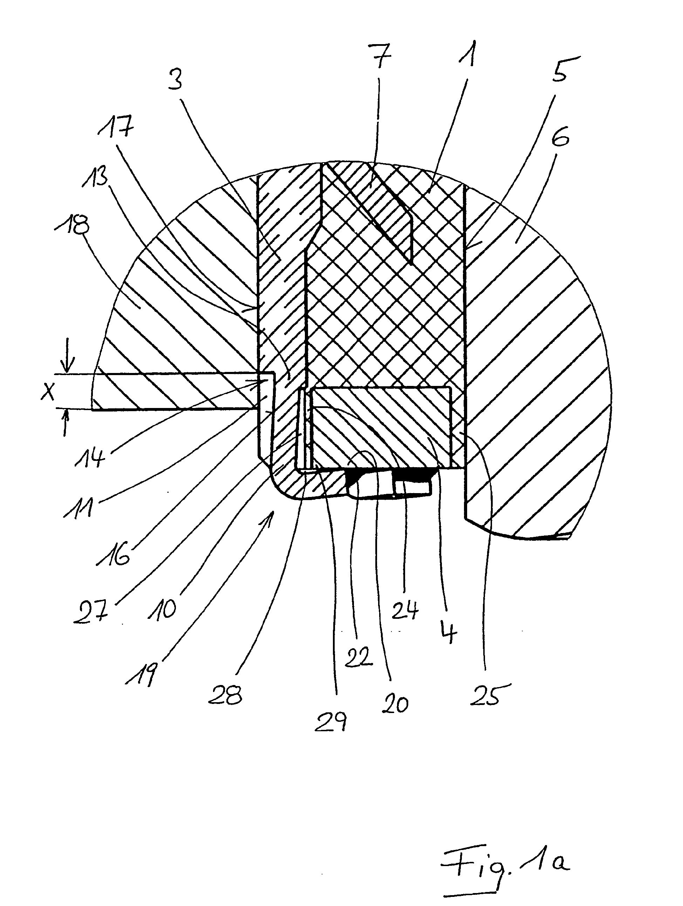

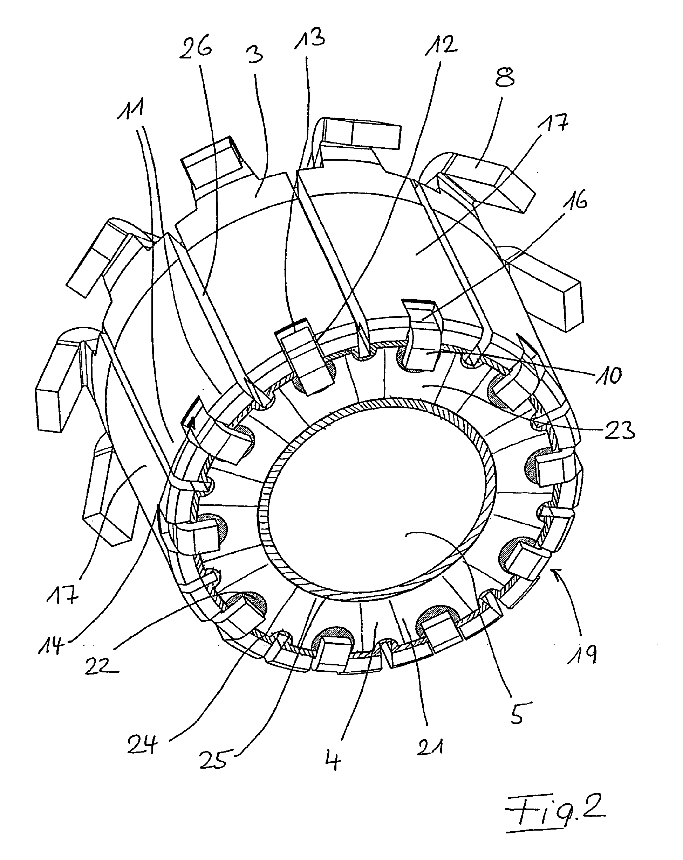

Der in den Figuren 1 und 2 dargestellte Trommelkommutator umfaßt als wesentliche Bauteile einen aus isolierender Preßstoffmasse hergestellten Trägerkörper 1, zehn gleichmäßig um die Kommutatorachse 2 herum angeordnete Leitersegmente 3 und eine ringförmige, keramische Entstörscheibe 4. Der Trägerkörper 1 weist eine zur Achse 2 konzentrische Bohrung 5 auf, welche der Anordnung des Kommutators auf einer Rotorwelle 6 dient.

Ankerteile 7 der Leitersegmente 3 sind in die Preßstoffmasse des Trägerkörpers 1 eingebettet, um die Leitersegmente auch bei hohen Drehzahlen trotz der dann herrschenden Fliehkräfte sicher zu verankern. Endseitig sind an den Leitersegmenten 3 Anschlußfahnen 8 vorgesehen, die, in als solches bekannter Weise, dem Anschluß von Wicklungsdrähten 9 an den Kommutator dienen.

An der den Anschlußfahnen 8 gegenüberliegenden Stirnseite der Leitersegmente 3 sind an diese federnde Kontaktzungen 10 angeformt. Beiderseits der Kontaktzungen weist jedes Leitersegment 3 zwei axiale Vorsprünge 11 auf, wobei zwischen den Kontaktzungen 10 und den benachbarten axialen Vorsprüngen 11 schmale Spalte 12 bestehen, so daß die Kontaktzungen zur Vermeidung einer Behinderung ihrer radialen Ausweichbewegung nicht an den Vorsprüngen 11 anliegen. Die radiale Dicke der Kontaktzungen 10 ist geringer als die radiale Dicke der Vorsprünge 11 sowie der Leitersegmente 3 in ihren an den Fußbereich 13 der Kontaktzungen 10 angrenzenden Zonen. Hierzu sind im Fußbereich 13 der Kontaktzungen sowohl radial außen wie auch radial innen Stufen 14 bzw. 15 ausgeformt; mit anderen Worten, die radiale Außenfläche 16 der federnden Kontaktzungen 10 ist gegenüber der Bürstenlauffläche 17 und der hierzu kongruenten radialen Außenfläche der Verlängerungen 11 nach innen versetzt. Dies gestattet, daß die Bürsten 18 zur Optimierung der Kontaktfläche durch einen Überstand X die Kontaktzungen 10 zumindest teilweise überlappen, so daß die radialen Außenfläche der den Kontaktzungen 10 benachbarten Vorsprünge 11 in die Bürstenlauffläche einbezogen werden.

Die federnden Kontaktzungen 10 weisen endseitig hakenförmige Umbiegungen 19 auf. Der Biegewinkel der hakenförmigen Umbiegungen beträgt dabei deutlich über 90°, so daß die Kontaktzungen 10 endseitig an entsprechenden Kontaktpunkten 20 an der Stirnfläche 21 der Entstörscheibe 4 anliegen. Eine Lötverbindung 22 stellt einen dauerhaften Kontakt der Kontaktzungen 10 mit entsprechenden metallisierten Zonen 23 der Entstörscheibe 4 sicher.

Die Entstörscheibe 4 ist in die Preßstoffmasse des Trägerkörpers 1 eingebettet, und zwar unter Ausbildung eines die Entstörscheibe 4 außen umgebenden Preßstoffmantels 24 einerseits und eines innen an der Entstörscheibe 4 anliegenden Preßstoffkragens 25 andererseits. Die Sägeschnitte 26, mittels derer der zunächst einstückige Leiterrohling in die einzelnen Leitersegmente 3 unterteilt wird, erstrecken sich, wie dies insbesondere Fig. 2 veranschaulicht, im Bereich der Vorsprünge 11 in den Preßstoffmantel 24 hinein; lediglich die Stirnfläche 21 der Entstörscheibe 4 liegt somit frei.

Im Anschluß an die weiter oben erläuterte radial innere Stufe 15 im Fußbereich 13 der Kontaktzungen 10 besteht zwischen den Kontaktzungen 10 und dem Preßstoffmantel 24 ein Luftspalt 27. Und die weiter oben erläuterte Umbiegung der Kontaktzungen 10 um mehr als 90° führt zu einem axialen Freiraum 28 der Kontaktzungen zu der Stirnfläche des Preßstoffmantels 24 sowie der äußeren Stirnkante 29 der Entstörscheibe 4. Beides sind Detailmerkmale, die sich im Hinblick auf die ungehinderte federnde Nachgiebigkeit der Kontaktzungen 10 zum radialen Dehnungsausgleich als günstig erweisen, wobei der axiale Freiraum 28 zudem einen axialen Dehnungsausgleich wie auch einen fertigungstechnisch wünschenswerten Toleranzausgleich begünstigt.

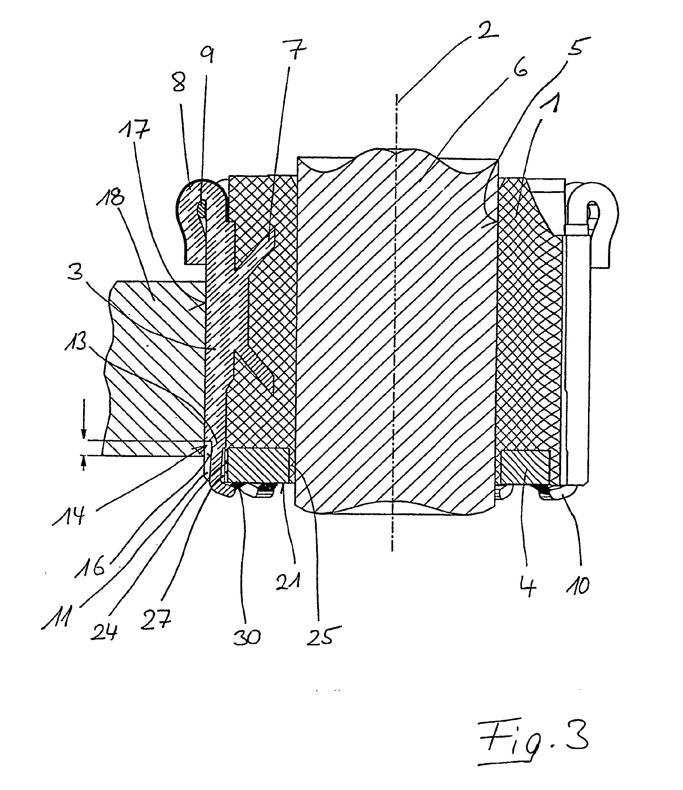

Die in Fig. 3 veranschaulichte Ausführungsform des erfindungsgemäßen Trommelkommutators entspricht hinsichtlich ihrer wesentlichen Gestaltungsmerkmale der Ausführungsform nach den Figuren 1 und 2. Als maßgeblicher Unterschied erweist sich lediglich die andersartige Ausführung der Kontaktzungen. Diese sind bei dem Trommelkommutator nach Fig. 3 nur wesentlich weniger als 90° einwärts gebogen und liegen nicht an der Stirnseite 21 der Entstörscheibe 4 an; sie halten vielmehr einen axialen Abstand zu der Stirnseite 21 der Entstörscheibe 4 ein, welcher durch eine Lotbrücke 30 überbrückt wird. Erkennbar halten allerdings auch bei dieser Ausführungsform aus den weiter oben dargelegten Gründen die Kontaktzungen 10 jeweils einen (radialen) Abstand zu der radialen Außenfläche sowie einen (axialen) Abstand zu der axialen Stirnfläche des Preßstoffmantels 24 ein.

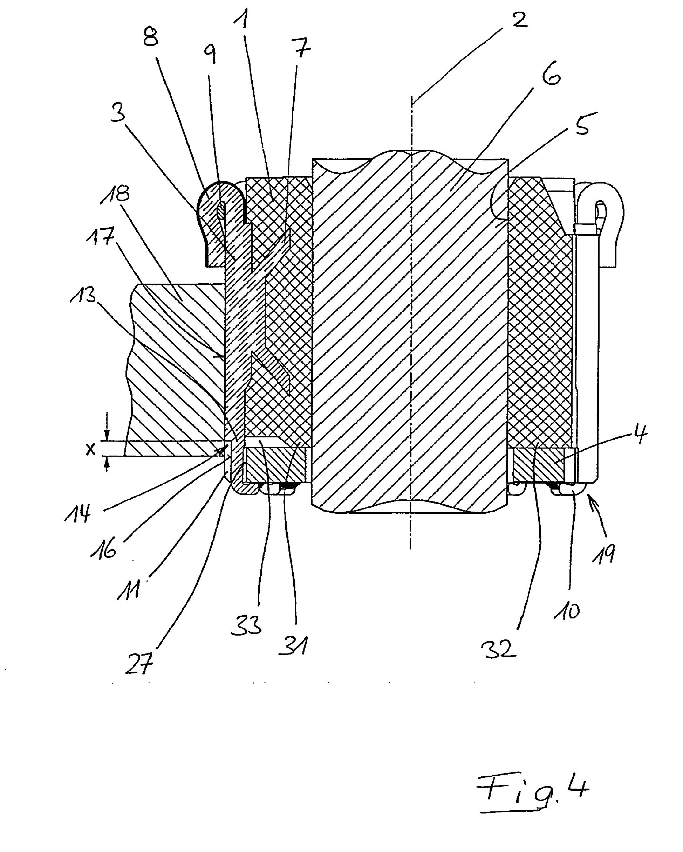

Der in Fig. 4 veranschaulichte Trommelkommutator unterscheidet sich von demjenigen nach den Figuren 1 und 2 insbesondere dadurch, daß hier die Entstörscheibe 4 nicht in die Preßstoffmasse des Trägerkörpers 1 eingebettet ist, sondern vielmehr stirnseitig auf dem Trägerkörper 1 aufliegt, und zwar im Bereich einer inneren Ringzone 31 einerseits und radialer Stege 32 andererseits. Die radialen Stege 32 sind dabei jeweils zwischen zwei einander benachbarten Leitersegmenten 3 angeordnet; und jeder Steg 32 trennt zwei taschenförmige Vertiefungen 33 voneinander ab, die jeweils benachbart zum Fußbereich 13 der Kontaktzungen 10 stirnseitig in dem Trägerkörper 1 vorgesehen sind.

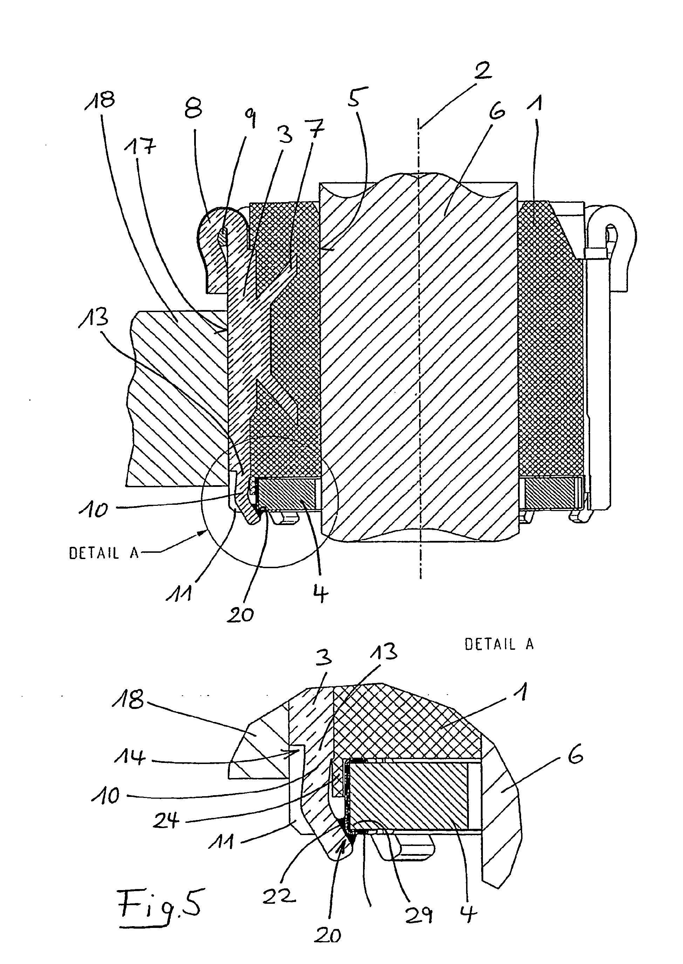

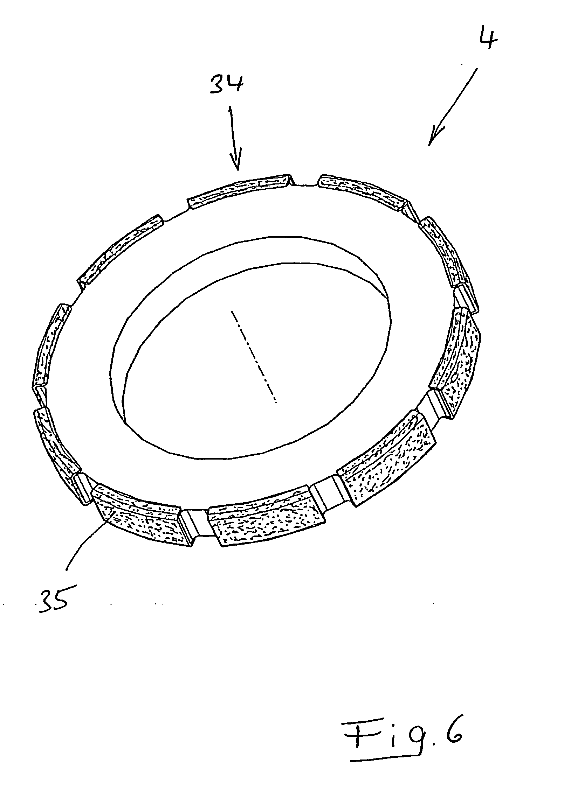

Die in Fig. 5 veranschaulichte vierte Ausführungsform des Trommelkommutators nach der vorliegenden Erfindung entspricht wiederum hinsichtlich wesentlicher Gestaltungsmerkmale den vorstehend erläuterten Trommelkommutatoren nach den Figuren 1 bis 4. In diesem Falle ist die Entstörscheibe 4 allerdings nicht als Varistor-Scheibe, sondern vielmehr als Kondensatorscheibe in Form eines sog. multi layer ceramic condensers ausgeführt. Diese Scheibe weist, wie dies in Fig. 6 veranschaulicht ist, nicht eine kreisrunde äußere Umfangsfläche auf; vielmehr besteht eine der Anzahl der Leitersegmente entsprechende Anzahl von radialen Vorsprüngen 34, an deren Umfangsflächen eine sich bis in die angrenzenden Bereiche der beiden Stirnflächen erstrekkende Metallisierung 35 vorgesehen ist. Im Bereich jener radialen Vorsprünge 34 sind die federnden Kontaktzungen 10 an die Entstörscheibe 4 angeschlossen, wobei die Kontaktpunkte 20 im Bereich der äußeren, nach außen weisenden Stirnkante 29 der Entstörscheibe 4 liegen.

Der die Entstörscheibe 4 umgebenden Preßstoffmantel 24 erstreckt sich im Falle des Trommelkommutators nach den Figuren 5 und 6 im Hinblick auf die vorstehend erläuterte Kontaktierung der Entstörscheibe nur über einen Teil von deren axialer Dicke. Ein innenliegender Preßstoffkragen ist überhaupt nicht vorgesehen.

Erkennbar ist im übrigen im Bereich der Fußpunkte 13 der Kontaktzungen 10 eine gegenüber den weiter oben erläuterten Trommelkommutatoren weitaus weniger ausgeprägte Stufe zu dem jeweils angrenzenden Bereich des zugeordneten Leitersegments 3 vorgesehen, so daß die Kontaktzungen 10 - ungeachtet ihrer Trennung zu dem Preßstoffmantel 24 - unmittelbar benachbart zu den Fußpunkten 13 an dem Preßstoffmantel anliegen.

## Patentansprüche

1. Trommelkommutator für eine elektrische Maschine, umfassend einen aus isolierendem Preßstoff gefertigten hülsenförmigen Trägerkörper (1), eine Mehrzahl von an diesem gleichmäßig um die Kommutatorachse (2) herum angeordneten metallischen Leitersegmenten (3) mit endseitig daran angeordneten Anschlußfahnen (8) und eine ringförmige Entstörscheibe (4), welche mit den Leitersegmenten (3) im Bereich der den Anschlußfahnen (8) gegenüberliegenden Enden elektrisch leitend verbunden ist,
**dadurch gekennzeichnet,**
**daß** die Leitersegmente (3) im Bereich der den Anschlußfahnen (8) gegenüberliegenden Enden federnde in Form von im Wesentlichen axialen Fingern Kontaktzungen (10) aufweisen, die entfernt von ihren Fußpunkten (13) jeweils an zugeordneten Kontaktpunkten (20) unmittelbar und fest mit der Entstörscheibe (4) verbunden sind und deren radiale Außenfläche (16) gegenüber der Bürstenlauffläche (17) nach innen versetzt ist, wobei die federnden Kontaktzungen (10) jeweils in dem Bereich zwischen ihrem Fußpunkt (13) und ihrem Kontaktpunkt (20) gegenüber den benachbarten Bauteilen des Trommelkommutators dergestalt getrennt sind, daß sich in diesem Bereich die relative Lage der Kontaktzungen (10) zu den diesen jeweils benachbarten Bauteilen des Kommutators wärmedehnungsbedingt verändern kann.

2. Trommelkommutator nach Anspruch 1,
**dadurch gekennzeichnet,**
**daß** die radiale Dicke der federnden Kontaktzungen (10) geringer ist als die radiale Dicke der Leitersegmente (3) zwischen dem Fußpunkt (13) der Kontaktzungen (10) und den Anschlußfahnen (8).

3. Trommelkommutator nach Anspruch 2,
**dadurch gekennzeichnet,**
**daß** die radiale Erstreckung der federnden Kontaktzungen (10) innerhalb der radialen Erstreckung der Leitersegmente (3) zwischen dem Fußpunkt (13) der Kontaktzungen (10) und den Anschlußfahnen (8) liegt.

4. Trommelkommutator nach einem der Ansprüche 1 bis 3,
**dadurch gekennzeichnet,**
**daß** die in Umfangsrichtung ermittelte Breite der federnden Kontaktzungen (10) geringer ist als die Breite der Leitersegmente (3).

5. Trommelkommutator nach Anspruch 4,
**dadurch gekennzeichnet,**
**daß** die Leitersegmente (3) benachbart den Kontaktzungen (10) axiale Vorsprünge (11) aufweisen, deren radiale Dicke größer ist als die radiale Dicke der Kontaktzungen (10) und deren radiale Außenflächen in Verlängerung der Bürstenlauffläche (17) angeordnet sind.

6. Trommelkommutator nach einem der Ansprüche 1 bis 5,
**dadurch gekennzeichnet,**
**daß** die Kontaktzungen (10) die Entstörscheibe (4) radial außen umgeben.

7. Trommelkommutator nach Anspruch 6,
**dadurch gekennzeichnet,**
**daß** die federnden Kontaktzungen (10) endseitig hakenförmig nach innen gekrümmt sind und die Kontaktpunkte (20) an der nach außen weisenden Stirnfläche (21) der Entstörscheibe (4) angeordnet sind.

8. Trommelkommutator nach Anspruch 7,
**dadurch gekennzeichnet,**
**daß** die federnden Kontaktzungen (10) im Bereich ihrer hakenförmigen Krümmung einen Abstand zu der äußeren stirnseitigen Kante (29) der Entstörscheibe (4) einhalten.

9. Trommelkommutator nach Anspruch 6,
**dadurch gekennzeichnet,**
**daß** die federnden Kontaktzungen (10) nach innen abgewinkelt sind und die Kontaktpunkte (20) an der nach außen weisenden, äußeren Stirnkante (29) der Entstörscheibe (4) angeordnet sind.

10. Trommelkommutator nach Anspruch 6,
**dadurch gekennzeichnet,**
**daß** die Kontaktpunkte an der radial äußeren Umfangsfläche der Entstörscheibe (4) angeordnet sind.

11. Trommelkommutator nach einem der Ansprüche 1 bis 5,
**dadurch gekennzeichnet,**
**daß** die Entstörscheibe um die Kommutatorachse (2) herum angeordnete Bohrungen aufweist, durch welche die Kontaktzungen (10) hindurchgeführt sind.

12. Trommelkommutator nach einem der Ansprüche 1 bis 11,
**dadurch gekennzeichnet,**
**daß** die Entstörscheibe (4) an ihrer äußeren Umfangsfläche zumindest über einen Teil ihrer axialen Dicke von einem aus isolierendem Preßstoff bestehenden Mantel (24) umgeben ist.

13. Trommelkommutator nach einem der Ansprüche 1 bis 12,
**dadurch gekennzeichnet,**
**daß** ein an der inneren Umfangsfläche der Entstörscheibe (4) anliegender, aus isolierendem Preßstoff bestehender Kragen (25) vorgesehen ist.

14. Trommelkommutator nach einem der Ansprüche 1 bis 13,
**dadurch gekennzeichnet,**
**daß** die Kontaktzungen (10) im Bereich der Kontaktpunkte (20) mit der Entstörscheibe (4) verlötet sind.

15. Trommelkommutator nach einem der Ansprüche 1 bis 13,
**dadurch gekennzeichnet,**
**daß** die Kontaktzungen (10) im Bereich der Kontaktpunkte (20) mit der Entstörscheibe (4) elektrisch leitend verklebt sind.

16. Trommelkommutator nach einem der Ansprüche 1 bis 15,
**dadurch gekennzeichnet,**
**daß** die Entstörscheibe (4) an ihren beiden Stirnflächen einander gegenüberliegenden Metallisierungszonen (23) aufweist, die jeweils paarweise über randseitige Metallisierungszonen elektrisch leitend miteinander verbunden sind.

17. Trommelkommutator nach einem der Ansprüche 1 bis 16,
**dadurch gekennzeichnet,**
**daß** die nach innen weisende axiale Stirnfläche der Entstörscheibe (4) zu dem Trägerkörper (1) einen Abstand einhält.

18. Trommelkommutator nach einem der Ansprüche 1 bis 17,
**dadurch gekennzeichnet,**
**daß** der Trägerkörper (1) benachbart zu den Fußpunkten (13) der Kontaktzungen (10) taschenförmige Vertiefungen (33) aufweist.

19. Kommutierungssystem, umfassend einen Trommelkommutator nach Anspruch 1 und mindestens zwei an den Bürstenlaufflächen (17) der Leitersegmente (3) anliegende Bürsten (18), wobei die Bürsten (18) axial über die Fußpunkte (13) der Kontaktzungen (10) hinaus überstehen (X).

20. Verfahren der Herstellung eines Trommelkommutators nach Anspruch 1, wobei der Trägerkörper (1) an einen die Gesamtheit der noch miteinander verbundenen Leitersegmente (3) umfassenden Leiterrohling angespritzt und der Leiterrohling in einem späteren Schritt durch Schnitte (26) in gegeneinander isolierte Leitersegmente (3) unterteilt wird, wobei die Entstörscheibe (4) auf das den Trägerkörper (1) und die Leitersegmente (3) bzw. den Leiterrohling umfassende Verbundteil aufgelegt und an die Kontaktzungen (10) angeschlossen wird.

21. Verfahren nach Anspruch 20,
**dadurch gekennzeichnet,**
**daß** beim Spritzen des Trägerkörpers (1) eine Ringnut ausgeformt wird, in die später die Entstörscheibe (4) eingelegt wird.

22. Verfahren der Herstellung eines Trommelkommutators nach Anspruch 1, wobei der Trägerkörper (1) an einen die Gesamtheit der noch miteinander verbundenen Leitersegmente (3) umfassenden Leiterrohling angespritzt und der Leiterrohling in einem späteren Schritt durch Schnitte (26) in gegeneinander isolierte Leitersegmente (3) unterteilt wird, wobei die Entstörscheibe (4) vor dem Anspritzen des Trägerkörpers (1) an dem Leiterrohling auf letzteren aufgesteckt und bei der Herstellung des Trägerkörpers (1) unter Ausbildung eines äußeren Preßstoffmantels (24) und/oder eines inneren Preßstoffkragens (25) in die der Herstellung des Trägerkörpers dienende Preßstoffmasse eingebettet wird.

23. Herstellverfahren nach einem der Ansprüche 20 bis 22,
**dadurch gekennzeichnet,**
**daß** zur Herstellung der federnden Kontaktzungen (10) die Leitersegmente (3) von der den Anschlußfahnen (8) gegenüberliegenden Stirnseiten her zweifach eingesägt werden, so daß zwischen den beiden Sägeschnitten jeweils eine federnde Kontaktzunge (10) ausgebildet wird, während benachbart zu den Kontaktzungen (10) axiale Vorsprünge (11) entstehen.

24. Herstellverfahren nach einem der Ansprüche 20 bis 22,
**dadurch gekennzeichnet,**
**daß** zur Herstellung der federnden Kontaktzungen (10) jeder der Leitersegmente (3) von der den Anschlußfahnen (8) gegenüberliegenden Stirnseiten her in zwei Ebenen geschert wird, um durch Abscheren eines mittleren Streifens aus dem Ausgangsmaterial die Kontaktzungen (10) und beidseits daneben axiale Vorsprünge (11) herzustellen.

25. Herstellverfahren nach Anspruch 24, **gekennzeichnet durch** ein zweistufiges Abscheren der federnden Kontaktzungen (10) aus dem verbleibenden Material, indem die Kontaktzungen (10) zunächst, in einem ersten Schritt, radial nach außen von dem verbleibenden Material der Leitersegmente (3) abgeschert und dann, in einem zweiten Schritt, radial nach innen zurückgebogen werden.

26. Herstellverfahren nach Anspruch 25,
**dadurch gekennzeichnet,**
**daß** die Kontaktzungen (10) beim zweiten Schritt endseitig nach innen abgekantet oder hakenförmig umgebogen werden.

27. Herstellungsverfahren nach Anspruch 25 oder Anspruch 26,
**dadurch gekennzeichnet,**
**daß** der Trägerkörper (1) zwischen der ersten und der zweiten Stufe des Abscherens der Kontaktzungen (10) aus dem Ausgangsmaterial der Leitersegmente (3) an den Leiterrohling angeformt wird.

28. Herstellungsverfahren nach einem der Ansprüche 25 bis 27,
**dadurch gekennzeichnet,**
**daß** die Entstörscheibe (4) zwischen der ersten und der zweiten Stufe des Abscherens der Kontaktzungen (10) aus dem Ausgangsmaterial der Leitersegmente (3) auf dem Leiterrohling oder dem an diesem ggfs. bereits angeformten Trägerkörper (1) positioniert wird.

## Claims

1. Drum commutator for an electric machine, comprising a sleeve-shaped support element (1) made of an insulating pressed material, a plurality of metallic conductor segments (3) which are evenly arranged thereupon around the axis (2) of the commutator and at the ends of which connecting lugs (8) are disposed, and an annular interference suppression disc (4) which is connected in an electrically conducting manner to the conductor segments (3) in the area of the ends lying opposite the connecting lugs (8),
**characterized in that**
the conductor segments (3) are provided with resilient contact tongues (10) in the form of essentially axial fingers in the area of the ends that are located opposite the connecting lugs (8), which are connected at a distance from their bases (13) respectively at assigned points of contact (20) directly and permanently to the interference suppression disc (4), and the radial outer surface (16) of which is staggered inwards with respect to the brush running surface (17), wherein the resilient contact tongues (10) are separated from the adjacent parts of the drum commutator respectively in the area between the base (13) and the point of contact (20) thereof such that the position of the contact tongues (10) relative to the adjacent parts of the commutator can be modified due to thermal expansion in said area.

2. Drum commutator according to Claim 1,
**characterized in that**
the radial thickness of the resilient contact tongues (10) is smaller than the radial thickness of the conductor segments (3) between the base (13) of the contact tongues (10) and the connecting lugs (8).

3. Drum commutator according to Claim 2,
**characterized in that**
the radial extent of the resilient contact tongues (10) lies within the radial extent of the conductor segments (3) between the base (13) of the contact tongues (10) and the connecting lugs (8).

4. Drum commutator according to any of Claims 1 to 3,
**characterized in that**
the width of the resilient contact tongues (10), determined in peripheral direction, is smaller than the width of the conductor segments (3).

5. Drum commutator according to Claim 4,
**characterized in that**
adjacent to the contact tongues (10), the conductor segments (3) have axial projections (11), the radial thickness of which is greater than the radial thickness of the contact tongues (10) and the radial outer surfaces of which are arranged in extension of the brush running surface (17).

6. Drum commutator according to any of Claims 1 to 5,
**characterized in that**
the contact tongues (10) surround the interference suppression disc (4) radially externally.

7. Drum commutator according to Claim 6,
**characterized in that**
the resilient contact tongues (10) are curved inwards in a hook shape on the end side, and the contact points (20) are arranged on the outwardly directed end face (21) of the interference suppression disc (4).

8. Drum commutator according to Claim 7,
**characterized in that**
the resilient contact tongues (10) maintain a distance, in the region of their hook-shaped curvature, from the outer edge (29), on the end side, of the interference suppression disc (4).

9. Drum commutator according to Claim 6,
**characterized in that**
the resilient contact tongues (10) are angled inwardly, and the contact points (20) are arranged on the outwardly directed, outer end edge (29) of the interference suppression disc (4).

10. Drum commutator according to Claim 6,
**characterized in that**
the contact points are arranged on the radially outer peripheral area of the interference suppression disc (4).

11. Drum commutator according to any of Claims 1 to 5,
**characterized in that**
the interference suppression disc has bores arranged around the commutator axis (2), through which the contact tongues (10) are guided.

12. Drum commutator according to any of Claims 1 to 11,
**characterized in that**
the interference suppression disc (4) is surrounded on its outer peripheral area at least over a portion of its axial thickness by a casing (24) consisting of insulating pressed material.

13. Drum commutator according to any of Claims 1 to 12,
**characterized in that**
a collar (25), consisting of insulating pressed material, is provided lying against the inner peripheral area of the interference suppression disc (4).

14. Drum commutator according to any of Claims 1 to 13,
**characterized in that**
the contact tongues (10) are soldered in the region of the contact points (20) with the interference suppression disc (4).

15. Drum commutator according to any of Claims 1 to 13,
**characterized in that**
the contact tongues (10) are glued in an electrically conducting manner in the region of the contact points (20) with the interference suppression disc (4).

16. Drum commutator according to any of Claims 1 to 15,
**characterized in that**
the interference suppression disc (4) has on its two end faces metallisation zones (23), lying opposite each other, which are respectively connected with each other in an electrically conducting manner in pairs via metallisation zones on the edge side.

17. Drum commutator according to any of Claims 1 to 16,
**characterized in that**
the inwardly directed axial end face of the interference suppression disc (4) maintains a distance from the support element (1).

18. Drum commutator according to any of Claims 1 to 17,
**characterized in that**
the support element (1) has pocket-shaped depressions (33) adjacent to the bases (13) of the contact tongues (10) .

19. Commutation system, comprising a drum commutator according to Claim 1 and at least two brushes (18) lying against the brush running surfaces (17) of the conductor segments (3), wherein the brushes (18) project axially (X) beyond the bases (13) of the contact tongues (10).

20. Method for the production of a drum commutator according to Claim 1, wherein the support element (1) is injected onto a conductor blank comprising the entirety of the conductor segments (3) which are still connected with each other, and the conductor blank is divided in a later step by notches (26) into conductor segments (3) which are insulated with respect to each other, wherein the interference suppression disc (4) is placed onto the composite part comprising the support element (1) and the conductor segments (3) or the conductor blank, and is connected to the contact tongues (10).

21. Method according to Claim 20,
**characterized in that**
on injecting the support element (1), an annular groove is formed out, into which subsequently the interference suppression disc (4) is inserted.

22. Method for the production of a drum commutator according to Claim 1, wherein the support element (1) is injected onto a conductor blank comprising the entirety of the conductor segments (3) which are still connected with each other, and the conductor blank is divided in a later step by notches (26) into conductor segments (3) which are insulated with respect to each other, wherein the interference suppression disc (4), before the injecting on of the support element (1) on the conductor blank is placed onto the latter and, during the production of the support element (1), with the formation of an outer casing (24) of pressed material and/or of an inner collar (25) of pressed material, is embedded into the pressed material matter serving for the production of the support element.

23. Production method according to any of Claims 20 to 22,
**characterized in that**
for the production of the resilient contact tongues (10), the conductor segments (3) are sawn into twice, from the direction of the end sides lying opposite the connecting lugs (8), so that between the two saw cuts, respectively a resilient contact tongue (10) is formed, whilst axial projections (11) are produced adjacent to the contact tongues (10).

24. Production method according to any of Claims 20 to 22,
**characterized in that**
for the production of the resilient contact tongues (10), each of the conductor segments (3) is cut in two planes from the direction of the end sides lying opposite the connecting lugs (8), in order to produce the contact tongues (10) and axial projections (11) adjacent on both sides, by cutting off a middle strip from the starting material.

25. Production method according to Claim 24,
**characterized by** a two-stage cutting off of the resilient contact tongues (10) from the remaining material, by the contact tongues (10) initially, in a first step, being cut off radially outwards from the remaining material of the conductor segments (3) and then, in a second step, being bent back radially inwards.

26. Production method according to Claim 25,
**characterized in that**
the contact tongues (10) in the second step on the end side are folded inwards or bent in a hook shape.

27. Production method according to Claim 25 or Claim 26,
**characterized in that**
the support element (1) is formed onto the conductor blank between the first and the second stage of cutting off of the contact tongues (10) from the starting material of the conductor segments (3).

28. Production method according to any of Claims 25 to 27,
**characterized in that**
the interference suppression disc (4) is positioned between the first and the second stage of cutting off of the contact tongues (10) from the starting material of the conductor segments (3) on the conductor blank or the support element (1) which may already be formed thereon.

## Revendications

1. Commutateur à tambour pour une machine à écrire, comprenant un corps support (1) en forme de douille, fabriqué à base de matière comprimée isolante, une pluralité de segments de conducteur (3) métalliques disposés sur ce corps de façon régulière autour de l'axe du commutateur (2) avec des pattes de raccordement (8) disposées côté extrémité dessus et un disque antiparasite (4) en forme de bague, qui est relié de façon électroconductrice aux segments de conducteur (3) dans la zone des extrémités faisant face aux pattes de raccordement (8), **caractérisé en ce que** les segments de conducteur (3) présentent dans la zone des extrémités faisant face aux pattes de raccordement (8) des lames de contact (10) élastiques sous forme de doigts essentiellement axiaux, qui sont reliées à distance de leurs points de base (13) respectivement sur des points de contact (20) attribués de façon directe et fixe avec le disque antiparasite (4) et dont la surface extérieure (16) radiale est décalée vers l'intérieur par rapport à la surface de frottement de brosse (17), les lames de contact (10) élastiques étant séparées respectivement dans la zone entre leur point de base (13) et leur point de contact (20) par rapport aux composants voisins du commutateur à tambour, **en ce que**, dans cette zone, la position relative des lames de contact (10) par rapport aux composants, respectivement voisins de ces lames, du commutateur peut varier du fait de la dilatation thermique.

2. Commutateur à tambour selon la revendication 1,
**caractérisé en ce que**
l'épaisseur radiale des lames de contact (10) élastiques est plus faible que l'épaisseur radiale des segments de conducteur (3) entre le point de base (13) des lames de contact (10) et les pattes de raccordement (8).

3. Commutateur à tambour selon la revendication 2,
**caractérisé en ce que**
l'extension radiale des lames de contact (10) élastiques se situe à l'intérieur de l'extension radiale des segments de conducteur (3) entre le point de base (13) des lames de contact (10) et les pattes de raccordement (8).

4. Commutateur à tambour selon l'une quelconque des revendications 1 à 3,
**caractérisé en ce que**
la largeur, calculée dans le sens périphérique, des lames de contact (10) élastiques est plus faible que la largeur des segments de conducteur (3).

5. Commutateur à tambour selon la revendication 4,
**caractérisé en ce que**
les segments de conducteur (3) présentent à proximité des lames de contact (10) des parties saillantes (11) axiales, dont l'épaisseur radiale est supérieure à l'épaisseur radiale des lames de contact (10) et dont des surfaces extérieures radiales sont disposées dans le prolongement de la surface de frottement de brosse (17).

6. Commutateur à tambour selon l'une quelconque des revendications 1 à 5,
**caractérisé en ce que**
les lames de contact (10) entourent radialement à l'extérieur le disque antiparasite (4).

7. Commutateur à tambour selon la revendication 6,
**caractérisé en ce que**
les lames de contact (10) élastiques sont incurvées côté extrémité en forme de crochet vers l'intérieur et les points de contact (20) sont disposés sur la surface avant (21), dirigée vers l'extérieur, du disque antiparasite (4).

8. Commutateur à tambour selon la revendication 7,
**caractérisé en ce que**
les lames de contact (10) élastiques incluent dans la zone de leur courbure en forme de crochet une distance à l'arête (29) extérieure côté avant du disque antiparasite (4).

9. Commutateur à tambour selon la revendication 6,
**caractérisé en ce que**
les lames de contact (10) élastiques sont coudées vers l'intérieur et les points de contact (20) sont disposés sur l'arête avant (29) extérieure, dirigée vers l'extérieur, du disque antiparasite (4).

10. Commutateur à tambour selon la revendication 6,
**caractérisé en ce que**
les points de contact sont disposés sur la surface périphérique radialement extérieure du disque antiparasite (4).

11. Commutateur à tambour selon l'une quelconque des revendications 1 à 5,
**caractérisé en ce que**
le disque antiparasite présente des perçages disposés autour de l'axe du commutateur (2), à travers lesquels les lames de contact (10) sont guidées.

12. Commutateur à tambour selon l'une quelconque des revendications 1 à 11,
**caractérisé en ce que**
le disque antiparasite (4) est entouré sur sa surface périphérique extérieure au moins sur une partie de son épaisseur axiale par une enveloppe (24) à base de matériau comprimé isolant.

13. Commutateur à tambour selon l'une quelconque des revendications 1 à 12,
**caractérisé en ce qu'**
il est prévu une collerette (25) s'appuyant sur la surface périphérique intérieure du disque antiparasite (4) et à base de matériau comprimé isolant.

14. Commutateur à tambour selon l'une quelconque des revendications 1 à 13,
**caractérisé en ce que**
les lames de contact (10) sont brasées dans la zone des points de contact (20) avec le disque antiparasite (4).

15. Commutateur à tambour selon l'une quelconque des revendications 1 à 13,
**caractérisé en ce que**
les lames de contact (10) sont collées de façon électroconductrice dans la zone des points de contact (20) avec le disque antiparasite (4).

16. Commutateur à tambour selon l'une quelconque des revendications 1 à 15,
**caractérisé en ce que**
le disque antiparasite (4) présente sur ses deux surfaces avant des zones de métallisation (23) se faisant face qui sont reliées respectivement par paires au moyen de zones de métallisation côté bordure de façon électroconductrice les unes avec les autres.

17. Commutateur à tambour selon l'une quelconque des revendications 1 à 16,
**caractérisé en ce que**
la surface avant axiale, dirigée vers l'intérieur, du disque antiparasite (4) respecte une distance par rapport au corps support (1).

18. Commutateur à tambour selon l'une quelconque des revendications 1 à 17,
**caractérisé en ce que**
le corps support (1) présente des cavités (33) en forme de poche à proximité des points de base (13) des lames de contact (10).

19. Système de commutation, comprenant un commutateur à tambour selon la revendication 1 et au moins deux brosses (18) s'appliquant sur les surfaces de frottement de brosse (17) des segments de conducteur (3), les brosses (18) débordant axialement des points de base (13) des lames de contact (10) (X).

20. Procédé de fabrication d'un commutateur à tambour selon la revendication 1, le corps support (1) étant moulé par injection sur une ébauche de conducteur comportant la totalité des segments de conducteur (3) encore reliés les uns aux autres et l'ébauche de conducteur étant divisée lors d'une étape ultérieure par des coupes (26) en segments de conducteur (3) isolés les uns des autres, le disque antiparasite (4) étant posé sur la partie mixte comportant le corps support (1) et les segments de conducteur (3) ou l'ébauche de conducteur et étant raccordé aux lames de contact (10).

21. Procédé selon la revendication (20),
**caractérisé en ce que**,
lors du moulage par injection du corps support (1), une rainure annulaire est formée, dans laquelle le disque antiparasite (4) est introduit.

22. Procédé pour la fabrication d'un commutateur à tambour selon la revendication 1, le corps support (1) étant formé par injection sur une ébauche de conducteur comportant la totalité des segments de conducteur (3) encore reliés les uns aux autres et l'ébauche de conducteur étant ensuite subdivisée lors d'une étape ultérieure par des coupes (26) en segments de conducteur (3) isolés les uns des autres, le disque antiparasite (4) étant emboîté avant la formation par projection du corps support (1) sur l'ébauche de conducteur sur celle-ci et étant enrobé lors de la fabrication du corps support (1), en formant une enveloppe de matière comprimée (24) extérieure et/ou une collerette intérieure en matière comprimée (25) dans la masse de matière comprimée servant à la fabrication du corps support.

23. Procédé de fabrication selon l'une quelconque des revendications 20 à 22,
**caractérisé en ce que**,
pour la fabrication des lames de contact (10) élastiques, les segments de conducteur (3) sont entaillées à la scie deux fois à partir des côtés avant faisant face aux pattes de raccordement (8), de sorte qu'à chaque fois une lame de contact (10) élastique est formée entre les deux coupes de scie, alors que des saillies (11) axiales se forment à proximité des lames de contact (10).

24. Procédé de fabrication selon l'une quelconque des revendications 20 à 22,
**caractérisé en ce que**,
pour la fabrication des lames de contact (10) élastiques, chacun des segments de conducteur (3) est cisaillé en deux niveaux à partir des côtés avant faisant face aux pattes de raccordement (8), afin de fabriquer les lames de contact (10) et des saillies (11) axiales des deux côtés à proximité par le cisaillement d'une bande centrale à base du matériau de départ.

25. Procédé de fabrication selon la revendication 24,
**caractérisé par** un cisaillement à deux niveaux des lames de contact (10) élastiques à base du matériau restant, du fait que les lames de contact (10) sont cisaillées d'abord, dans une première étape, radialement vers l'extérieur à partir du matériau restant des segments de conducteur (3) et sont recourbées ensuite, dans une seconde étape, radialement vers l'intérieur.

26. Procédé de fabrication selon la revendication 25,
**caractérisé en ce que**
les lames de contact (10) sont pliées lors de la seconde étape côté extrémité vers l'intérieur ou cintrées en forme de crochet.

27. Procédé de fabrication selon la revendication 25 ou la revendication 26,
**caractérisé en ce que**
le corps support (1) est formé par projection entre le premier et le second niveau du cisaillement des lames de contact (10), à base du matériau de départ des segments de conducteur (3) sur l'ébauche de conducteur.

28. Procédé de fabrication selon l'une quelconque des revendications 25 à 27,
**caractérisé en ce que**
le disque antiparasite (4) est positionné entre le premier et le second niveaux du cisaillement des lames de contact (10) à base du matériau de départ des segments de conducteur (3) sur l'ébauche de conducteur ou sur le corps support (1) éventuellement déjà formé par projection sur cette ébauche.
